# EUROPEAN PATENT APPLICATION

(11) **EP 4 354 390 A1**
(43) Date of publication of application: **17.04.2024**
(21) Application number: 22820327.9
(22) Date of filing: 09.06.2022
(51) Int. Cl.: G06T 7/00

(54) **RECOGNIZING DEVICE, TERMINAL DEVICE, RECOGNIZER CONSTRUCTING DEVICE, RECOGNIZER CORRECTING DEVICE, CONSTRUCTION METHOD, AND CORRECTION METHOD**

(30) Priority: 09.06.2021 JP 2021096738; 25.10.2021 JP 2021174114
(71) Applicant: Kyocera Corporation, Kyoto-shi Kyoto 612-8501 (JP)
(72) Inventor: DAI Xiaoyan, Kyoto-shi, Kyoto 612-8501 (JP); TANIMOTO Hiroki, Kyoto-shi, Kyoto 612-8501 (JP); KIM Jaechul, Kyoto-shi, Kyoto 612-8501 (JP); HSIEH Yisan, Kyoto-shi, Kyoto 612-8501 (JP)
(74) Representative: Viering, Jentschura & Partner mbB Patent- und Rechtsanwälte
(86) International application number: PCT/JP2022/023368
(87) International publication number: WO 2022/260148

(57) **Abstract**

A recognition device includes a communication unit and a controller. The communication unit acquires an image. The controller functions as an object recognizer. The object recognizer estimates a target object appearing in the image by causing multiple classifiers to classify the target object in order. The multiple classifiers include an uppermost-layer classifier and multiple lower-layer classifiers. The multiple lower-layer classifiers include a lowermost-layer classifier that classifies the target object into a lower-order category which is identification information of the target object. The number of layers from the uppermost-layer classifier to the lowermost-layer classifier is different between at least two target objects having different identification information among target objects estimated by the object recognizer.

## Description

### CROSS-REFERENCE TO RELATED APPLICATIONS

This application claims priority based on Japanese Patent Application No. 2021-096738 filed in Japan on June 9, 2021 and Japanese Patent Application No. 2021-174114 filed in Japan on October 25, 2021, the entire disclosure of which is incorporated herein by reference.

### TECHNICAL FIELD

The present disclosure relates to a recognition device, a terminal apparatus, a recognizer constructing apparatus, a recognizer modifying apparatus, a construction method, and a modification method.

### BACKGROUND OF INVENTION

In recent years, a technique of recognizing an object included in an image by machine learning has been developed.

For example, Patent Literature 1 describes a recognition method using both general object recognition and specific object recognition.

### CITATION LIST

### PATENT LITERATURE

Patent Literature 1: International Publication No. 2011/081192

### SUMMARY

A recognition device according to a first aspect includes:
an acquisition unit configured to acquire an image; and
a controller configured to function as an object recognizer that estimates a target object appearing in the image by causing multiple classifiers hierarchized in multiple layers to classify the target object in order, in which
the multiple classifiers include:
   an uppermost-layer classifier that classifies the target object appearing in the image into any one of multiple categories; and
   multiple lower-layer classifiers each of which performs classification of a category classified by an upper-layer classifier into a lower-order category,
the lower-layer classifiers include one or more lowermost-layer classifiers each of which classifies the target object into the lower-order category which is identification information of the target object, and
the number of layers from the uppermost-layer classifier to the one or more lowermost-layer classifiers is different between at least two target objects having different identification information among target objects estimated by the object recognizer.

A terminal apparatus according to a second aspect includes:
an image capturing unit;
a communication unit configured to provide an image generated by the image capturing unit to a recognition device and acquire identification information of a target object appearing in the image, the recognition device including: an acquisition unit configured to acquire an image; and a controller configured to function as an object recognizer that estimates a target object appearing in the image by causing multiple classifiers hierarchized in multiple layers to classify the target object in order, in which the multiple classifiers include: an uppermost-layer classifier that classifies the target object appearing in the image into any one of multiple categories; and multiple lower-layer classifiers each of which performs classification of a category classified by an upper-layer classifier into a lower-order category, the lower-layer classifiers include one or more lowermost-layer classifiers each of which classifies the target object into the lower-order category which is identification information of the target object, and the number of layers from the uppermost-layer classifier to the one or more lowermost-layer classifiers is different between at least two target objects among target objects estimated by the object recognizer; and
an output device configured to report the identification information.

A recognizer constructing apparatus according to a third aspect is
an information processing apparatus that constructs an object recognizer that estimates identification information identifying a target object appearing in an image by causing multiple classifiers hierarchized in multiple layers to classify the target object in order, the information processing apparatus including:
an acquisition unit configured to acquire at least an image and identification information of each of multiple target objects; and
a controller configured to construct multiple classifiers, based on the image and the identification information of each of the multiple target objects, in which
the multiple classifiers include:
   an uppermost-layer classifier that classifies, based on the image acquired by the acquisition unit, the target object in the image into a category; and
   a lowermost-layer classifier that classifies the target object belonging to a category classified by an upper-layer classifier into any piece of the identification information, and
the controller is configured to:
   construct the uppermost-layer classifier that determines, based on an initial criterion, categories to which the multiple target objects respectively belong, and that classifies the target objects to the determined categories;
   construct, based on the image and the identification information of each of all the target objects belonging to the respective categories classified by the uppermost-layer classifier, a temporary lowermost-layer classifier that classifies all the target objects belonging to the respective categories into respective pieces of the identification information;
   fix the temporary lowermost-layer classifier as a lowermost-layer classifier when the temporary lowermost-layer classifier satisfies a predetermined condition; and
   until the temporary lowermost-layer classifier satisfies the predetermined condition, repeat determination of a certain criterion that enables classification of all target objects each determined to belong to a certain category classified by a classifier in a layer immediately above the temporary lowermost-layer classifier, determination of lower-order categories to which all the target objects respectively belong based on the certain criterion, and replacement of the temporary lowermost-layer classifier with an intermediate-layer classifier constructed based on an image of each of all the target objects belonging to the determined lower-order categories and the lower-order categories; and construction of a temporary lowermost-layer classifier that classifies all the target objects belonging to the respective categories into respective pieces of the identification information, based on the image and the identification information of each of all the target objects belonging to the respective categories classified by the intermediate-layer classifier.

A recognizer modifying apparatus according to a forty-fourth aspect includes
an acquisition unit configured to acquire at least an image and identification information of a new target object; and
a controller configured to modify an object recognizer in a recognition device by using the new target object, the recognition device including: an acquisition unit configured to acquire an image; and a controller configured to function as an object recognizer that estimates a target object appearing in the image by causing multiple classifiers hierarchized in multiple layers to classify the target object in order, in which the multiple classifiers include: an uppermost-layer classifier that classifies the target object appearing in the image into any one of multiple categories; and multiple lower-layer classifiers each of which performs classification of a category classified by an upper-layer classifier into a lower-order category, the lower-layer classifiers include one or more lowermost-layer classifiers each of which classifies the target object into the lower-order category which is identification information of the target object, and the number of layers from the uppermost-layer classifier to the one or more lowermost-layer classifiers is different between at least two target objects among target objects estimated by the object recognizer, in which
the controller is configured to:
   cause the identification information of the new target object to be estimated based on the image by using the object recognizer;
   specify a lowermost-layer classifier that has classified the identification information;
   replace a temporary lowermost-layer classifier with the lowermost-layer classifier, the temporary lowermost-layer classifier being constructed based on the image and the identification information of each of all target objects and the new target object that are classified by the lowermost-layer classifier;
   fix the temporary lowermost-layer classifier as a lowermost-layer classifier when the temporary lowermost-layer classifier satisfies a predetermined condition; and
   until the temporary lowermost-layer classifier satisfies the predetermined condition, repeat determination of a certain criterion that enables classification of all target objects each determined to belong to a certain category classified by a classifier in a layer immediately above the temporary lowermost-layer classifier, determination of lower-order categories to which all the target objects respectively belong based on the certain criterion, and replacement of the temporary lowermost-layer classifier with an intermediate-layer classifier constructed based on an image of each of all the target objects belonging to the determined lower-order categories and the lower-order categories; and construction of a temporary lowermost-layer classifier that classifies all the target objects belonging to the respective categories into respective pieces of the identification information, based on the image and the identification information of each of all the target objects belonging to the respective categories classified by the intermediate-layer classifier.

A construction method according to a fifth aspect is
a construction method for an object recognizer that estimates identification information identifying a target object appearing in an image by causing multiple classifiers hierarchized in multiple layers to classify the target object in order, the construction method including:
acquiring at least an image and identification information of each of multiple target obj ects; and
constructing multiple classifiers, based on the image and the identification information of each of the multiple target objects, in which
the multiple classifiers include:
   an uppermost-layer classifier that classifies, based on the image acquired by the acquisition unit, the target object in the image into a category; and
   a lowermost-layer classifier that classifies the target object belonging to a category classified by an upper-layer classifier into any piece of the identification information, and
the constructing of the multiple classifiers includes:
   determining, based on an initial criterion, categories to which the multiple target objects respectively belong;
   constructing the uppermost-layer classifier that classifies the target objects to the determined categories;
   constructing, based on the image and the identification information of each of all the target objects belonging to the respective categories classified by the uppermost-layer classifier, a temporary lowermost-layer classifier that classifies all the target objects belonging to the respective categories into respective pieces of the identification information;
   fixing the temporary lowermost-layer classifier as a lowermost-layer classifier when the temporary lowermost-layer classifier satisfies a predetermined condition; and
   until the temporary lowermost-layer classifier satisfies the predetermined condition, repeating determination of a certain criterion that enables classification of all target objects each determined to belong to a certain category classified by a classifier in a layer immediately above the temporary lowermost-layer classifier, determination of lower-order categories to which all the target objects respectively belong based on the certain criterion, and replacement of the temporary lowermost-layer classifier with an intermediate-layer classifier constructed based on an image of each of all the target objects belonging to the determined lower-order categories and the lower-order categories; and construction of a temporary lowermost-layer classifier that classifies all the target objects belonging to the respective categories into respective pieces of the identification information, based on the image and the identification information of each of all the target objects belonging to the respective categories classified by the intermediate-layer classifier.

A modification method according to a sixth aspect includes:
acquiring at least an image and identification information of a new target object; and
training an object recognizer in a recognition device by using the new target object, the recognition device including: an acquisition unit configured to acquire an image; and a controller configured to function as an object recognizer that estimates a target object appearing in the image by causing multiple classifiers hierarchized in multiple layers to classify the target object in order, in which the multiple classifiers include: an uppermost-layer classifier that classifies the target object appearing in the image into any one of multiple categories; and multiple lower-layer classifiers each of which performs classification of a category classified by an upper-layer classifier into a lower-order category, the lower-layer classifiers include one or more lowermost-layer classifiers each of which classifies the target object into the lower-order category which is identification information of the target object, and the number of layers from the uppermost-layer classifier to the one or more lowermost-layer classifiers is different between at least two target objects among target objects estimated by the object recognizer, in which
the training of the object recognizer includes:
   causing the identification information of the new target object to be estimated based on the image by using the object recognizer;
   specifying a lowermost-layer classifier that has classified the identification information;
   replacing a temporary lowermost-layer classifier with the lowermost-layer classifier, the temporary lowermost-layer classifier being constructed based on the image and the identification information of each of all target objects and the new target object that are classified by the lowermost-layer classifier;
   fixing the temporary lowermost-layer classifier as a lowermost-layer classifier when the temporary lowermost-layer classifier satisfies a predetermined condition; and
   until the temporary lowermost-layer classifier satisfies the predetermined condition, repeating determination of a certain criterion that enables classification of all target objects each determined to belong to a certain category classified by a classifier in a layer immediately above the temporary lowermost-layer classifier, determination of lower-order categories to which all the target objects respectively belong based on the certain criterion, and replacement of the temporary lowermost-layer classifier with an intermediate-layer classifier constructed based on an image of each of all the target objects belonging to the determined lower-order categories and the lower-order categories; and construction of a temporary lowermost-layer classifier that classifies all the target objects belonging to the respective categories into respective pieces of the identification information, based on the image and the identification information of each of all the target objects belonging to the respective categories classified by the intermediate-layer classifier.

### BRIEF DESCRIPTION OF THE DRAWINGS

FIG. 1 is a configuration diagram illustrating a schematic configuration of an information processing system including a terminal apparatus including a recognition device according to a first embodiment.
FIG. 2 is a perspective view illustrating an appearance of the terminal apparatus in FIG. 1.
FIG. 3 is a block diagram illustrating a schematic configuration of the recognition device in FIG. 2.
FIG. 4 is a configuration diagram of an object recognizer implemented by a controller in the recognition device in FIG. 1.
FIG. 5 is a tree diagram of an object recognition model corresponding to the object recognizer in FIG. 4.
FIG. 6 is a diagram illustrating a schematic configuration of the information processing apparatus in FIG. 1.
FIG. 7 is a flowchart for describing a recognizer construction process executed by the controller in FIG. 6.
FIG. 8 is a flowchart for describing a modification process executed by the controller in FIG. 6.

### DESCRIPTION OF EMBODIMENTS

Hereinafter, embodiments of the present disclosure will be described with reference to the drawings. Among the constituent elements illustrated in the attached drawings, the same constituent elements are denoted by the same reference signs.

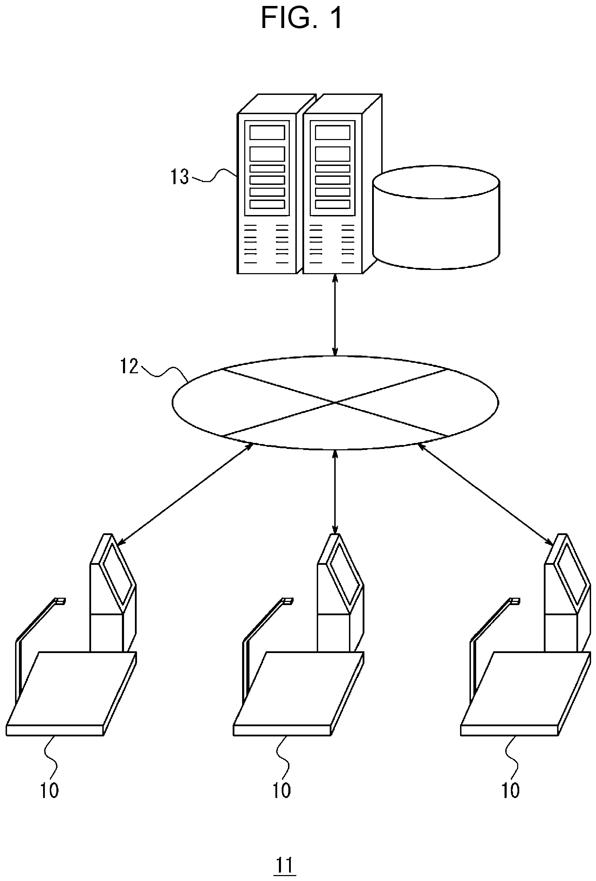

As illustrated in FIG. 1, an information processing system 11 including a terminal apparatus 10 including a recognition device according to an embodiment of the present disclosure may include at least one terminal apparatus 10, a network 12, and an information processing apparatus (recognizer constructing apparatus, recognizer modifying apparatus) 13. In the present embodiment, the information processing system 11 includes multiple terminal apparatuses 10. Each terminal apparatus 10 and the information processing apparatus 13 may communicate with each other via the network 12.

The information processing system 11 is applied to any system that identifies, based on an image of a target to be detected included in an image, the target to be detected. The information processing system 11 is applied to, for example, a payment system that identifies, based on an image, a product which is a target to be detected. Hereinafter, the information processing system 11 will be described using an example in which the information processing system 11 is applied to a payment system.

The terminal apparatus 10 may capture an image of a product placed on the terminal apparatus 10 by a purchaser. The terminal apparatus 10 may perform object recognition on the captured image and estimate which product in a store an object included in the image is. The object in the image means an object drawn in the image. The information processing apparatus 13 may calculate a billing amount, based on an estimation result of all products whose images have been captured by the terminal apparatus 10. The information processing apparatus 13 may notify the terminal apparatus 10 of the billing amount. The terminal apparatus 10 may present the billing amount to the purchaser and request the purchaser to pay the amount.

The information processing system 11 performs object recognition by using an object recognizer constructed to be capable of specifying the name of a product based on an image of the product. A product whose name can be specified by the object recognizer is also referred to as a registered product. The information processing apparatus 13 functioning as a recognizer constructing apparatus newly constructs an object recognizer. The information processing apparatus 13 functioning as a recognizer modifying apparatus modifies an object recognizer such that the name of a product can be specified based on an image of the product with respect to a product other than a product whose name can be specified by an existing object recognizer. Hereinafter, the terminal apparatus 10 and the information processing apparatus 13 will be described in detail.

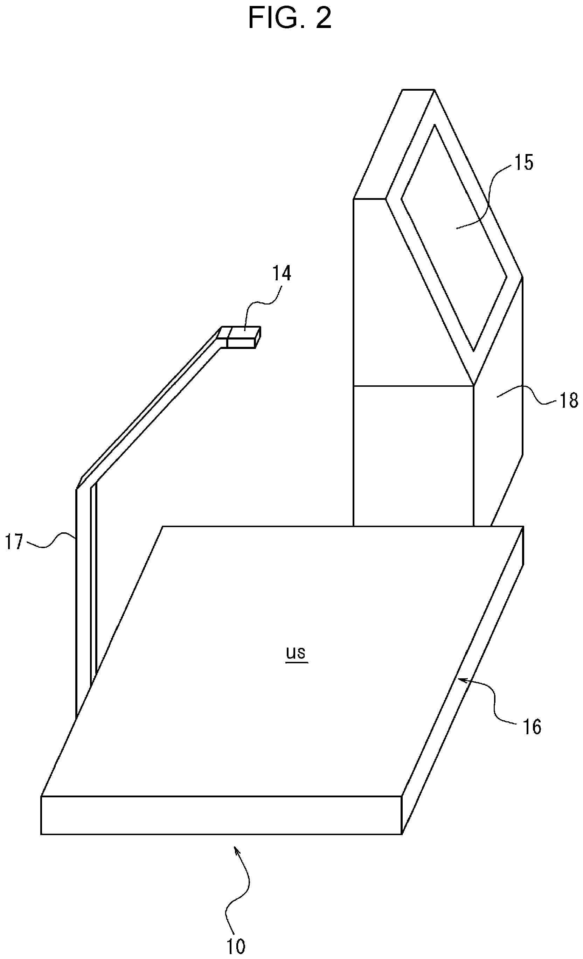

As illustrated in FIG. 2, the terminal apparatus 10 includes an image capturing unit 14, an output device 15, a placement table 16, a support column 17, and a recognition device 18.

The image capturing unit 14 is, for example, fixed so as to be capable of capturing an image of the entire range of the placement table 16. The image capturing unit 14 is, for example, fixed to the support column 17 extending from a side surface of the placement table 16. The image capturing unit 14 is, for example, fixed so as to be capable of capturing an image of the entirety of an upper surface us of the placement table 16 and to have an optical axis perpendicular to the upper surface us.

The image capturing unit 14 may include a visible light camera or an infrared camera. The camera includes an imaging optical system and an imaging element. The imaging optical system includes, for example, optical members such as one or more lenses and a diaphragm. The one or more lenses may each be any lens having any focal length, and may be, for example, a general lens, a wide-angle lens including a fisheye lens, or a zoom lens having a variable focal length. The imaging optical system forms a subject image on a light receiving surface of the imaging element. The imaging element is, for example, a charge coupled device (CCD) image sensor, a complementary metal-oxide semiconductor (CMOS) image sensor, a far infrared rays (FIR) camera, or the like. The imaging element generates a captured image by capturing a subject image formed on the light receiving surface.

The output device 15 may be any conventionally known display that displays an image. The display may function as a touch screen, as described below. The output device 15 may be a speaker that reports information. The output device 15 may report, for example, a recognition result of object recognition performed by the recognition device 18. The output device 15 may make various reports, for example, when a failure occurs in the information processing system 11 or the like. The output device 15 may report, by sound or the like, success or failure of a determination by the recognition device 18 and necessity or unnecessity of modification of an object recognizer.

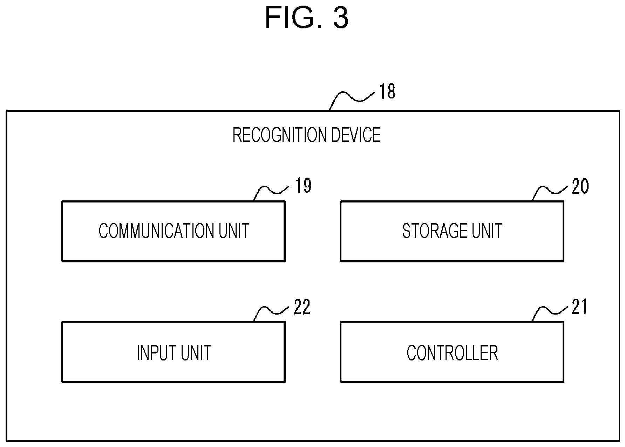

As illustrated in FIG. 3, the recognition device 18 includes a communication unit 19 (acquisition unit), a storage unit 20, and a controller 21. The recognition device 18 may further include an input unit 22. In the first embodiment, the recognition device 18 is separated from the image capturing unit 14 and the output device 15, but may be integrated with, for example, at least any one of the image capturing unit 14, the placement table 16, the support column 17, and the output device 15.

The communication unit 19 includes, for example, a communication module that communicates with the image capturing unit 14 via a communication line that is wired or wireless. The communication unit 19 receives, in other words, acquires, an image as a signal from the image capturing unit 14. The communication unit 19 may include a communication module that communicates with the output device 15 via a communication line. The communication unit 19 may transmit, as an image signal, an image to be displayed to the output device 15. The communication unit 19 may receive, from the output device 15 which is a display, a position signal corresponding to a position where a contact is detected on the display surface. The communication unit 19 includes a communication module that communicates with the information processing apparatus 13 via the network 12. The communication unit 19 receives a parameter for constructing an object recognizer from the information processing apparatus 13. The communication unit 19 may transmit result information corresponding to a fixed recognition result, which will be described below, to the information processing apparatus 13. The communication unit 19 may receive amount information corresponding to a billing amount from the information processing apparatus 13.

The input unit 22 is capable of detecting an operation input from a user. The input unit 22 includes at least one input interface capable of detecting an input from a user. The input interface is, for example, a physical key, an electrostatic capacitance key, a pointing device, a touch screen integrated with a display, a microphone, or the like. In the present embodiment, an input/output interface is a touch screen using the output device 15.

The storage unit 20 includes any one of a semiconductor memory, a magnetic memory, and an optical memory. The semiconductor memory is, for example, a random access memory (RAM), a read only memory (ROM), or the like. The RAM is, for example, a static random access memory (SRAM), a dynamic random access memory (DRAM), or the like. The ROM is, for example, an electrically erasable programmable read only memory (EEPROM) or the like. The storage unit 20 may function as a main storage device, an auxiliary storage device, or a cache memory. The storage unit 20 stores data used for an operation of the recognition device 18 and data obtained by an operation of the recognition device 18. For example, the storage unit 20 stores a system program, an application program, embedded software, and the like. For example, the storage unit 20 stores a parameter for constructing an object recognizer acquired from the information processing apparatus 13.

The controller 21 includes at least one processor, at least one dedicated circuit, or a combination thereof. The processor is a general-purpose processor such as a central processing unit (CPU) or a graphics processing unit (GPU), or a dedicated processor specialized for specific processing. The dedicated circuit may be, for example, a field-programmable gate array (FPGA), an application specific integrated circuit (ASIC), or the like. The controller 21 executes processing related to an operation of the recognition device 18 while controlling individual units of the recognition device 18. The processing related to an operation of the recognition device 18 is, for example, object recognition.

The controller 21 functions as an object recognizer that estimates a target object included in an image acquired by the communication unit 19. The controller 21 may cause the output device 15 to output a recognition result of object recognition. The controller 21 may provide the recognition result to the information processing apparatus 13.

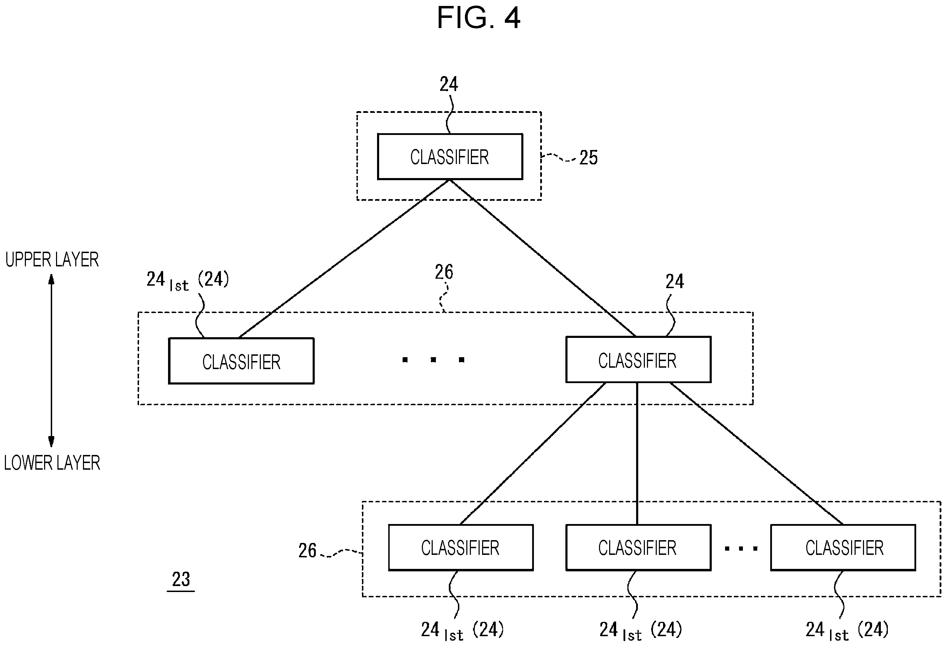

As illustrated in FIG. 4, an object recognizer 23 includes multiple classifiers 24 hierarchized in multiple layers. The object recognizer 23 performs object recognition by causing the multiple classifiers 24 to perform classification in order from an upper layer to a lower layer. The multiple classifiers 24 include a classifier 24 in an uppermost layer 25 and multiple classifiers 24 in lower layers 26.

The classifier 24 in the uppermost layer 25 classifies a target object appearing in an image acquired by the communication unit 19 into any one of multiple categories. The categories classified by the classifier 24 in the uppermost layer 25 may be categories related to packaging, such as bags, boxes, bottles, cans, and trays; categories related to product classification information; or categories related to other appearance features about a target object. Alternatively, the categories classified by the classifier 24 in the uppermost layer 25 may be categories corresponding to feature quantities determined by clustering, as will be described below. The classifier 24 in the uppermost layer 25 may classify a target object based on, for example, a deep neural network (DNN), pattern matching, image analysis, or the like. Pattern matching is based on, for example, an image feature quantity such as a SIFT feature quantity, a SURF feature quantity, or Bag-of-Features. The classifier 24 in the uppermost layer 25 does not identify a target object but classifies a target object into a category, and thus a classifier suitable for general object recognition, such as a DNN, is preferably employed as the classifier 24.

Each of the classifiers 24 in the lower layers 26 performs classification of a category classified by the classifier 24 in the immediately upper layer into a lower-order category. A category classified in each lower layer 26 may be a category other than a category classified by the classifier 24 in an upper layer. A category classified in each lower layer 26 may be a category classifying the size of a target object. Each of the classifiers 24 in the lower layers 26 may classify a target object based on, for example, a DNN, pattern matching, image analysis, or the like. The classifiers 24 in the lower layers 26 except lowermost-layer classifiers 24ₗₛₜ described below do not identify a target object but classify the target object into a category, and thus classifiers suitable for general object recognition, such as DNNs, are preferably employed as the classifiers 24 in the lower layers 26.

The classifiers 24 in the lower layers 26 include lowermost-layer classifiers 24ₗₛₜ. A lower-order category classified by each lowermost-layer classifier 24ₗₛₜ is identification information for identifying a target object. The identification information is, for example, a product name of the target object, an ID managed on a master in association with the product name, or the like in the terminal apparatus 10 used in a retail store. The lowermost-layer classifiers 24ₗₛₜ may classify a target object based on, for example, a DNN, pattern matching, image analysis, or the like. The lowermost-layer classifiers 24ₗₛₜ identify a target object, and thus classifiers suitable for specific object recognition, such as pattern matching, are preferably employed as the lowermost-layer classifiers 24ₗₛₜ.

The number of layers from the classifier 24 in the uppermost layer 25 to the lowermost-layer classifiers 24ₗₛₜ is different between at least two target objects having different identification information among multiple target objects that can be estimated by the object recognizer 23, in other words, multiple target objects used for constructing or modifying the object recognizer. For example, for a target object recognized by a classifier 24 in the second layer in the entirety, the classifier 24 is a lowermost-layer classifier 24ₗₛₜ, and the number of layers corresponding to the target object is two. For a target object recognized by a classifier 24 in the third layer in the entirety, the classifier 24 is a lowermost-layer classifier 24ₗₛₜ, and the number of layers corresponding to the target object is three. In FIG. 4, the maximum number of layers of the object recognizer 23 is three, but may be four or more.

The number of categories classified by at least one or some of the multiple classifiers 24 may be equal to or less than a first threshold value. The first threshold value is set to any value that causes the correct answer rate of a target object by the object recognizer 23 to exceed a predetermined value. The degree of variation in a classified category of a feature quantity used for classification by at least one or some of the multiple classifiers 24 may be equal to or less than a second threshold value. The degree of variation is, for example, the variance of feature quantities of all target objects belonging to a classified category. The second threshold value is set to any value that causes the correct answer rate of a target object by the object recognizer 23 to exceed a predetermined value.

The correct answer rate of all target objects classified by at least one or some of the lowermost-layer classifiers 24ₗₛₜ may be equal to or more than a third threshold value.

The classifier 24 in the uppermost layer 25 may be a model constructed to specify the category of a target object appearing in an image. The classifiers 24 in the lower layers 26 may each be a model constructed to classify the category specified by a classifier 24 in an upper layer into another category.

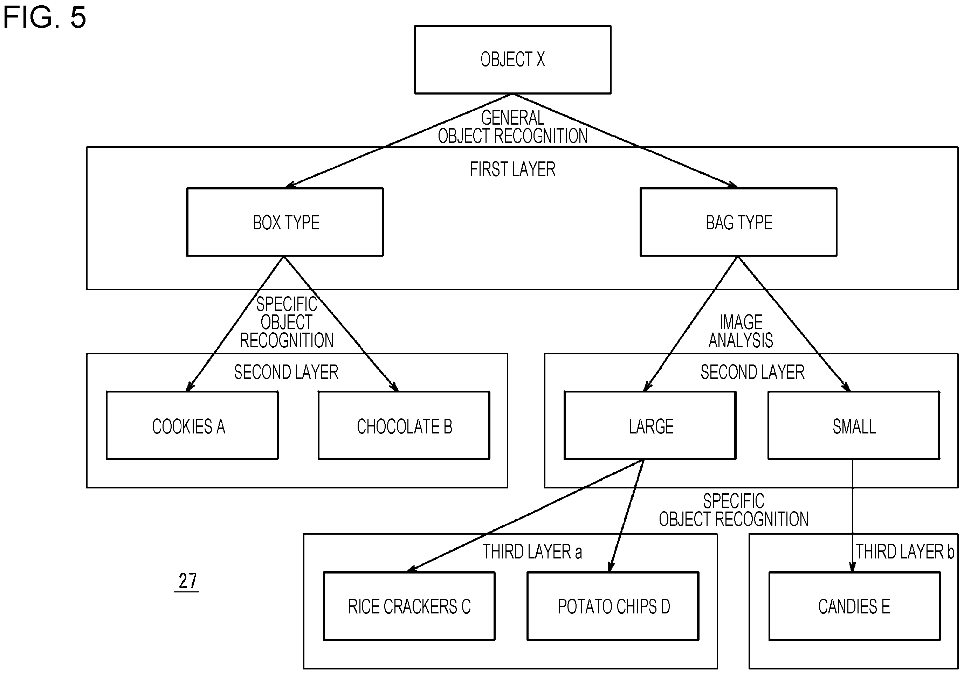

An example of an object recognition model corresponding to the object recognizer 23 will be described below. As illustrated in FIG. 5, an object recognition model 27 has a hierarchical structure including at least a first layer in which categorization is performed based on the category of an imaging target and a second layer in which categorization is performed based on classes belonging to each category. The first layer corresponds to categories classified by the classifier 24 in the uppermost layer 25 in the object recognizer 23. The second layer corresponds to categories classified by a classifier 24 in the lower layer 26 which is one level lower than the uppermost layer 25 in the object recognizer 23. When further classification is necessary for a class in the second layer belonging to a category, there are provided, immediately below the second layer, subclasses in a third layer obtained by further grouping the classes belonging to the second layer. The third layer corresponds to categories classified by a classifier 24 in the lower layer 26 which is two levels lower than the uppermost layer 25 in the object recognizer 23. In the description of the object recognition model 27, for easy understanding, the categories in the second layer will be referred to as classes, and the categories in the third layer will be referred to as subclasses.

A procedure of estimating a target object using the object recognizer 23 will be described below by using the object recognition model 27. The controller 21 classifies an object X, which is a target object included in an image, into any category in a category group in a preset first layer by using the classifier 24 in the uppermost layer 25. In the illustrated object recognition model 27, the category group in the first layer is classification by the type of packaging of the target object, and includes a category of the same or similar box type and a category of the same or similar bag type.

If the object X is classified into the box type, the controller 21 further classifies the object X into any class in the class group in the second layer belonging to the box type by using the classifier 24 corresponding to the category of the box type. In the illustrated object recognition model 27, the class group belonging to the box type may include cookies A and chocolate B, which are identification information.

If the object X is classified into the bag type, the controller 21 further classifies the object X into any class in the class group in the second layer belonging to the bag type by using the classifier 24 corresponding to the category of bag type. Unlike the box type, the category of bag type has an enormous class group belonging thereto and has a decreased object recognition accuracy. Thus, the class group belonging to the category of bag type includes classes for further classification based on the degree of similarity that is not based on identification information but is based on a feature arbitrarily determined in the class group. The further classification is classification from a class group belonging to the second layer to a sub-class group belonging to the third layer lower than the second layer. For example, a class group in the second layer may include classes related to the size of the target object, and may specifically include, as classes, whether the area of the bag is larger than or smaller than an area threshold value.

If the object X is classified into the bag type and the bag is classified into a large size, the controller 21 further classifies the object X into any subclass in the subclass group in the third layer belonging to the large bag size by using the classifier 24 corresponding to the category of the large bag size. The subclass group belonging to the large size may include rice crackers C and potato chips D, which are identification information. If the object X is classified into the bag type and the bag is classified into a small size, the controller 21 further classifies the object X into any subclass in the subclass group in the third layer belonging to the small bag size by using the classifier 24 corresponding to the category of the small bag size. The subclass group belonging to the small size may include candies E, which is identification information.

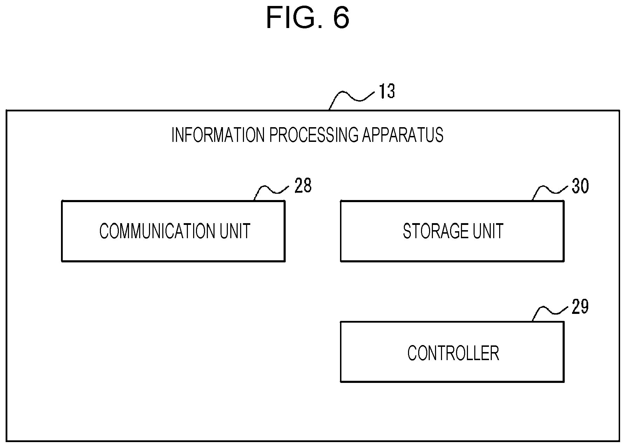

As illustrated in FIG. 6, the information processing apparatus 13 includes a communication unit (acquisition unit) 28 and a controller 29. The information processing apparatus 13 may further include a storage unit 30. As described above, the information processing apparatus 13 constructs the object recognizer 23 that estimates identification information identifying a target object appearing in an image by causing the multiple classifiers 24 hierarchized in multiple layers to perform classification in order.

The communication unit 28 may include at least one communication module connectable to the network 12. The communication module is, for example, a communication module conforming to a communication standard such as a wired local area network (LAN), a wireless LAN, or Wi-Fi. The communication unit 28 may be connected, by the communication module, to the network 12 via a wired LAN or the like.

The communication unit 28 may include a communication module capable of communicating with various external apparatuses via, for example, a communication line. The communication module is a communication module conforming to a standard of the communication line. The communication line may include at least either a wired line or a wireless line.

The communication unit 28 may be directly or indirectly connected to the image capturing unit 14 via the network 12 or a communication line. Being indirectly connected to the image capturing unit 14 means, for example, that the communication unit 28 is connected to the terminal apparatus 10 including the image capturing unit 14. The communication unit 28 acquires an image generated by the image capturing unit 14.

The communication unit 28 may be directly or indirectly connected to an input unit via the network 12 or a communication line. The input unit may be the input unit 22 of the recognition device 18 or may be an input interface directly connected to the information processing apparatus 13. The communication unit 28 acquires identification information detected by the input unit.

When the object recognizer 23 is to be newly constructed, the communication unit 28 acquires at least the image and identification information of each of multiple target objects on which object recognition is performed by the object recognizer 23. When the existing object recognizer 23 is to be modified based on a new target object, the communication unit 28 acquires at least the image and identification information of the target object used for the modification.

When the object recognizer 23 is to be newly constructed, the communication unit 28 may acquire the feature quantity of each of multiple target objects. When the existing object recognizer 23 is to be modified based on a new target object, the communication unit 28 may acquire the feature quantity of the target object used for the modification. The feature quantity may be generated as information by detection of the input unit and calculation by another information processing apparatus based on an image.

The communication unit 28 may acquire an instruction to determine a classification criterion for constructing the classifiers 24. The instruction to determine a classification criterion is, for example, an instruction to designate categories classified by the classifiers 24, as will be described below. At the time of acquisition of the instruction, categories corresponding to multiple target objects are also acquired. The designated categories are categories determined from the appearances of the target objects. The instruction may be generated by a user's operation input detected by the input unit.

The communication unit 28 may be directly or indirectly connected to the output device 15 via the network 12 or a communication line. Being indirectly connected to the output device 15 means, for example, that the communication unit 28 is connected to the terminal apparatus 10 including the output device 15.

The storage unit 30 includes any one of a semiconductor memory, a magnetic memory, and an optical memory. The semiconductor memory is, for example, a RAM, a ROM, or the like. The RAM is, for example, an SRAM, a DRAM, or the like. The ROM is, for example, an EEPROM or the like. The storage unit 30 may function as a main storage device, an auxiliary storage device, or a cache memory. The storage unit 30 stores data used for an operation of the information processing apparatus 13 and data obtained by an operation of the information processing apparatus 13. For example, the storage unit 30 stores a system program, an application program, embedded software, and the like.

The controller 29 includes at least one processor, at least one dedicated circuit, or a combination thereof. The processor is a general-purpose processor such as a CPU or a GPU, or a dedicated processor specialized for specific processing. The dedicated circuit may be, for example, an FPGA, an ASIC, or the like. The controller 29 executes processing related to an operation of the information processing apparatus 13 while controlling individual units of the information processing apparatus 13. The processing related to an operation of the information processing apparatus 13 is, for example, construction of the object recognizer 23 or modification of the object recognizer 23.

When acquiring information indicating a recognition result of object recognition from the terminal apparatus 10, the controller 29 may read the selling price of the estimated object, which is the recognition result, from the storage unit 30. The controller 29 may calculate a billing amount which is the sum of the selling prices of estimated objects. The controller 29 may transmit amount information corresponding to the billing amount to the terminal apparatus 10 to which the information indicating the estimated objects has been provided.

The controller 29 constructs the object recognizer 23, based on at least the image and identification information of a target object. The controller 29 further constructs the multiple classifiers 24 constituting the object recognizer 23, based on at least the image and identification information of the target object. A method for constructing the multiple classifiers 24 by the controller 29 will be described below.

The controller 29 determines, based on an initial criterion, categories to which multiple target objects belong. The controller 29 may determine the initial criterion based on the instruction to determine the classification criterion acquired by the communication unit 28. The controller 29 may determine the initial criterion by performing clustering on feature quantities obtained by performing image analysis on the multiple target objects. In the clustering, at least either feature quantities generated by image analysis on the images of the multiple target objects or feature quantities acquired by the communication unit 28 may be used.

The controller 29 constructs the classifier 24 in the uppermost layer 25 that classifies a target object into a determined category. The controller 29 may construct the classifier 24 in the uppermost layer 25 by any method. The any method is, for example, a statistical method such as machine learning or non-machine learning. The controller 29 performs, for example, machine learning of the image of a target object by using, as annotation data, the category determined for the target object based on the initial criterion. Alternatively, the controller 29 performs non-machine learning by using a combination of a category determined for a target object based on the initial criterion and the image of the target object.

The controller 29 constructs a temporary lowermost-layer classifier 24ᵥₗₛₜ, based on the image and identification information of each of all target objects belonging to respective categories classified by the classifier 24 in the uppermost layer 25. The controller 29 may construct the temporary lowermost-layer classifier 24ᵥₗₛₜ by any method. The any method is, for example, a statistical method such as machine learning or non-machine learning. The temporary lowermost-layer classifier 24ᵥₗₛₜ classifies all the target objects belonging to the respective categories classified by the classifier 24 in the uppermost layer 25 into respective pieces of identification information.

If the temporary lowermost-layer classifier 24ᵥₗₛₜ satisfies a predetermined condition, the controller 29 fixes the temporary lowermost-layer classifier 24ᵥₗₛₜ as a lowermost-layer classifier 24ₗₛₜ.

The predetermined condition is a condition that a determination can be made that further classification of the category classified by the temporary lowermost-layer classifier 24ᵥₗₛₜ is not necessary.

The predetermined condition may be a third condition that the correct answer rate of the target object classified by the temporary lowermost-layer classifier 24ᵥₗₛₜ is equal to or more than a third threshold value. The correct answer rate may be calculated based on the verification image and identification information of each target object.

Alternatively, the predetermined condition may be at least one of a first condition and a second condition. The first condition is that the number of pieces of identification information classified by the temporary lowermost-layer classifier 24ᵥₗₛₜ is equal to or less than a first threshold value. The second condition is that the degree of variation in the category corresponding to the temporary lowermost-layer classifier 24ᵥₗₛₜ of the feature quantity used for classification by the classifier 24 in the layer immediately above the temporary lowermost-layer classifier 24ᵥₗₛₜ is equal to or less than a second threshold value.

The controller 29 may apply, to the determination of fixing as the lowermost-layer classifier 24ₗₛₜ, a predetermined condition having a higher correct answer rate among the correct answer rate of a target object classified by the temporary lowermost-layer classifier 24ᵥₗₛₜ when the predetermined condition is the first condition and the correct answer rate of a target object classified by the temporary lowermost-layer classifier 24ᵥₗₛₜ when the predetermined condition is the second condition.

The controller 29 may determine whether the correct answer rate of the target object classified by the lowermost-layer classifier 24ₗₛₜ after the first condition is satisfied is lower than the correct answer rate of the target object classified by the temporary lowermost-layer classifier 24ᵥₗₛₜ before the first condition is satisfied. If the correct answer rate is lower, the controller 29 may stop the construction of an intermediate-layer classifier 24 for satisfying the first condition and the construction of a lowermost-layer classifier 24ₗₛₜ under the intermediate-layer classifier 24. The construction of the intermediate-layer classifier 24 will be described below.

The controller 29 may determine whether the correct answer rate of the target object classified by the lowermost-layer classifier 24ₗₛₜ after the second condition is satisfied is lower than the correct answer rate of the target object classified by the temporary lowermost-layer classifier 24ᵥₗₛₜ before the second condition is satisfied. If the correct answer rate is lower, the controller 29 may stop the construction of an intermediate-layer classifier 24 for satisfying the second condition and the construction of a lowermost-layer classifier 24ₗₛₜ under the intermediate-layer classifier 24.

The controller 29 may use any one of the first condition, the second condition, and the third condition described above for each classifier 24. Thus, the controller 29 may construct the object recognizer 23 simultaneously including an intermediate-layer classifier 24 and a lowermost-layer classifier 24ₗₛₜ constructed to satisfy the first condition, an intermediate-layer classifier 24 and a lowermost-layer classifier 24ₗₛₜ constructed to satisfy the second condition, and a lowermost-layer classifier 24ₗₛₜ constructed to satisfy the third condition.

The controller 29 repeats, until a temporary lowermost-layer classifier 24ᵥₗₛₜ satisfies the predetermined condition, the construction of an intermediate-layer classifier 24, the replacement of the temporary lowermost-layer classifier 24ᵥₗₛₜ with the intermediate-layer classifier 24, and the construction of a temporary lowermost-layer classifier 24ᵥₗₛₜ in the layer immediately below the intermediate-layer classifier 24.

To construct the intermediate-layer classifier 24, the controller 29 determines a certain criterion that enables classification of all target objects each determined to belong to a category classified by the classifier 24 in the layer immediately above the temporary lowermost-layer classifier 24ᵥₗₛₜ. The controller 29 may determine the certain criterion, based on the instruction to determine the classification criterion acquired by the communication unit 28. The controller 29 may determine the certain criterion by performing clustering obtained by performing image analysis on the feature quantities of multiple target objects. In the clustering, at least either feature quantities generated by image analysis on the images of the multiple target objects or feature quantities acquired by the communication unit 28 may be used. The certain criterion may be determined, for example, as described above, by using the size of a target object as a feature quantity. The size of a target object may be calculated as an area ratio of a region occupied by the target object to the entire region of an image. A statistical value such as an average or median of the size of the target object may be used as the certain criterion for classification.

Based on the determined certain criterion, the controller 29 determines a lower-order category to which each of all the target objects determined to belong to a category classified by the classifier 24 in the layer immediately above the temporary lowermost-layer classifier 24ᵥₗₛₜ belongs. The determination of the lower-order category may be based on the feature quantity used for clustering of each of all the target objects or the category of the target object acquired together with an instruction.

The controller 29 constructs an intermediate-layer classifier 24, based on the image of each of all the target objects belonging to the determined lower-order category and the lower-order category. The controller 29 may construct the intermediate-layer classifier 24 by any method. The any method is, for example, a statistical method such as machine learning or non-machine learning. The controller 29 performs, for example, machine learning of the image of a target object by using, as annotation data, the lower-order category determined for the target object based on the certain criterion. Alternatively, the controller 29 performs non-machine learning by using a combination of the lower-order category determined for a target object based on the certain criterion and the image of the target object.

In accordance with the construction of the intermediate-layer classifier 24, the controller 29 constructs a temporary lowermost-layer classifier 24ᵥₗₛₜ that classifies all the target objects belonging to respective categories classified by the intermediate-layer classifier 24 into pieces of identification information. The controller 29 constructs a temporary lowermost-layer classifier 24ᵥₗₛₜ, based on the image and identification information of each of all target objects belonging to respective categories classified by the intermediate-layer classifier 24.

The controller 29 may store a parameter for constructing the object recognizer 23 constructed in the above-described manner in the storage unit 30. The controller 29 may provide the parameter for constructing the object recognizer 23 to the terminal apparatus 10 via the communication unit 28.

In the case of acquiring the image and identification information of a new target object for the existing object recognizer 23 via the communication unit 28, the controller 29 modifies the object recognizer 23 by using the new target object. The modification of the object recognizer 23 using a new target object will be described below. The object recognizer 23 may be the object recognizer 23 in which a parameter is stored in the storage unit 30, or may be the object recognizer 23 corresponding to a parameter generated by an external information processing apparatus and acquired via the communication unit 28.

The controller 29 causes identification information to be estimated from the acquired image by object recognition using the object recognizer 23. The controller 29 specifies the lowermost-layer classifier 24ₗₛₜ that has classified the target object into the identification information.

The controller 29 constructs a temporary lowermost-layer classifier 24ᵥₗₛₜ, based on the image and identification information of each of all the target objects and the new target object that are classified by the specified lowermost-layer classifier 24ₗₛₜ. The controller 29 may construct the temporary lowermost-layer classifier 24ᵥₗₛₜ by any method. The any method is, for example, a statistical method such as machine learning or non-machine learning. The controller 29 replaces the specified lowermost-layer classifier 24ₗₛₜ with the newly constructed temporary lowermost-layer classifier 24ᵥₗₛₜ.

If the temporary lowermost-layer classifier 24ᵥₗₛₜ satisfies a predetermined condition, the controller 29 fixes the temporary lowermost-layer classifier 24ᵥₗₛₜ as a lowermost-layer classifier 24ₗₛₜ. The predetermined condition may be the same as the predetermined condition for fixing a temporary lowermost-layer classifier 24ᵥₗₛₜ as a lowermost-layer classifier 24ₗₛₜ when the object recognizer 23 is to be newly constructed.

The controller 29 repeats, until a temporary lowermost-layer classifier 24ᵥₗₛₜ satisfies the predetermined condition, the construction of an intermediate-layer classifier 24, the replacement of the temporary lowermost-layer classifier 24ᵥₗₛₜ with the intermediate-layer classifier 24, and the construction of a temporary lowermost-layer classifier 24ᵥₗₛₜ in the layer immediately below the intermediate-layer classifier 24. The construction of the intermediate-layer classifier 24 will be described below.

To construct the intermediate-layer classifier 24, the controller 29 determines a certain criterion that enables classification of all target objects each determined to belong to a category classified by the classifier 24 in the layer immediately above the temporary lowermost-layer classifier 24ᵥₗₛₜ. The controller 29 may determine the certain criterion, based on the instruction to determine the classification criterion acquired by the communication unit 28. The controller 29 may determine the certain criterion by performing clustering on the feature quantities of multiple target objects. In the clustering, at least either feature quantities generated by image analysis on the images of the multiple target objects or feature quantities acquired by the communication unit 28 may be used.

Based on the determined certain criterion, the controller 29 determines a lower-order category to which each of all the target objects determined to belong to a category classified by the classifier 24 in the layer immediately above the temporary lowermost-layer classifier 24ᵥₗₛₜ belongs. The determination of the lower-order category may be based on the feature quantity used for clustering of each of all the target objects or the category of the target object acquired together with an instruction.

The controller 29 constructs an intermediate-layer classifier 24, based on the image of each of all the target objects belonging to the determined lower-order category and the lower-order category. The controller 29 may construct the intermediate-layer classifier 24 by any method. The any method is, for example, a statistical method such as machine learning or non-machine learning. The controller 29 performs, for example, machine learning of the image of a target object by using, as annotation data, the lower-order category determined for the target object based on the certain criterion. Alternatively, the controller 29 performs non-machine learning by using a combination of the lower-order category determined for a target object based on the certain criterion and the image of the target object.

In accordance with the construction of the intermediate-layer classifier 24, the controller 29 constructs a temporary lowermost-layer classifier 24ᵥₗₛₜ that classifies all the target objects belonging to respective categories classified by the intermediate-layer classifier 24 into pieces of identification information. The controller 29 constructs a temporary lowermost-layer classifier 24ᵥₗₛₜ, based on the image and identification information of each of all target objects belonging to respective categories classified by the intermediate-layer classifier 24.

The controller 29 may store a parameter for constructing the object recognizer 23 modified in the above-described manner in the storage unit 30. The controller 29 may provide the parameter for constructing the object recognizer 23 to the terminal apparatus 10 via the communication unit 28.

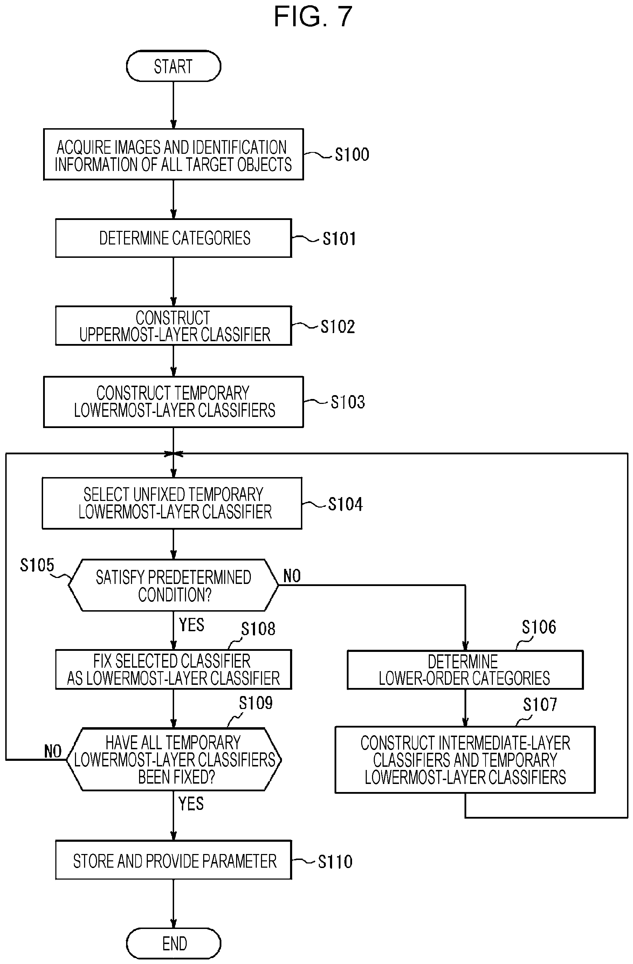

A recognizer construction process executed by the controller 29 of the information processing apparatus 13 in the present embodiment will be described with reference to the flowchart in FIG. 7. The recognizer construction process is started in response to acquiring an execution command for newly constructing a recognizer via the communication unit 28 of the information processing apparatus 13.

In step S100, the controller 29 acquires at least the image and identification information of each of all target objects that are to be recognized by an object recognizer to be constructed. To acquire the images and identification information, the controller 29 may cause the output device 15 of the terminal apparatus 10 to output an input request for the images and identification information. After at least the images and identification information have been acquired, the process proceeds to step S101.

In step S101, the controller 29 determines, based on an initial criterion, categories to which the multiple target objects respectively belong. After the determination, the process proceeds to step S102.

In step S102, the controller 29 constructs the classifier 24 in the uppermost layer 25 so as to classify the target objects into the categories determined in step S101. After the construction, the process proceeds to step S103.

In step S103, the controller 29 constructs temporary lowermost-layer classifiers 24ᵥₗₛₜ so as to classify the target objects belonging to the respective categories classified by the classifier 24 in the uppermost layer 25 into identification information. After the construction, the process proceeds to step S104.

In step S104, the controller 29 selects one unfixed temporary lowermost-layer classifier 24ᵥₗₛₜ. After the selection, the process proceeds to step S105.

In step S105, the controller 29 determines whether the temporary lowermost-layer classifier 24ₗₛₜ selected in step S104 satisfies a predetermined condition. As described above, the predetermined condition may be at least one of that the correct answer rate of the target object classified by the temporary lowermost-layer classifier 24ᵥₗₛₜ is equal to or more than a third threshold value, that the number of pieces of identification information classified by the temporary lowermost-layer classifier 24ᵥₗₛₜ is equal to or less than a first threshold value, and that the degree of variation in the category corresponding to the temporary lowermost-layer classifier 24ᵥₗₛₜ of the feature quantity used for classification by the classifier 24 in the layer immediately above the temporary lowermost-layer classifier 24ᵥₗₛₜ is equal to or less than a second threshold value. If the predetermined condition is not satisfied, the process proceeds to step S106. If the predetermined condition is satisfied, the process proceeds to step S108.

In step S106, the controller 29 determines, based on a certain criterion, categories to which the multiple target objects respectively belong. After the determination, the process proceeds to step S107.

In step S107, the controller 29 constructs intermediate-layer classifiers 24 so as to classify the target objects into the categories determined in step S106. The controller 29 further constructs temporary lowermost-layer classifiers 24ᵥₗₛₜ so as to classify the target objects belonging to the respective categories classified by the intermediate-layer classifiers 24 into identification information. After the construction, the process returns to step S104.

In step S108 to which the process proceeds when the correct answer rate is equal to or more than the third threshold value in step S105, the controller 29 fixes the temporary lowermost-layer classifier 24ᵥₗₛₜ selected in step S104 as a lowermost-layer classifier 24ₗₛₜ. After the fixing, the process proceeds to step S109.

In step S109, the controller 29 determines whether all the temporary lowermost-layer classifiers 24ᵥₗₛₜ have been fixed as lowermost-layer classifiers 24ₗₛₜ. If not all the temporary lowermost-layer classifiers 24ᵥₗₛₜ have been fixed, the process returns to step S104. If all the temporary lowermost-layer classifiers 24ᵥₗₛₜ have been fixed, the process proceeds to step S110.

In step S110, the controller 29 stores, in the storage unit 30, a parameter for constructing the object recognizer 23 formed of all the classifiers 24. The controller 29 controls the communication unit 28 to provide the parameter for constructing the object recognizer 23 to the terminal apparatus 10. After the parameter has been stored and provided, the recognizer construction process ends.

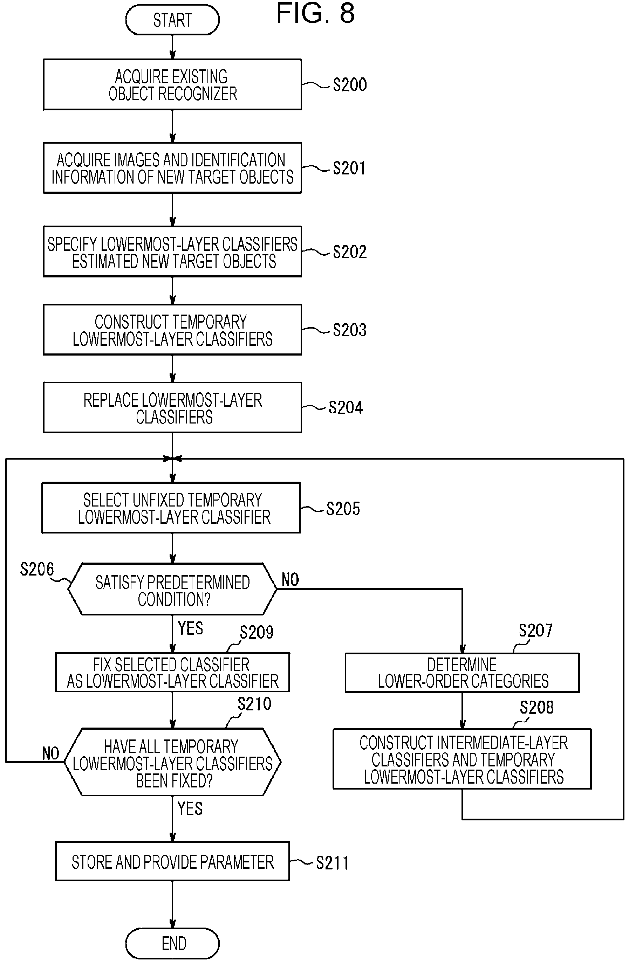

A modification process executed by the controller 29 of the information processing apparatus 13 according to the present embodiment will be described with reference to the flowchart in FIG. 8. The modification process is started in response to acquiring an execution command for modifying a recognizer via the communication unit 28 of the information processing apparatus 13.

In step S200, the controller 29 acquires the existing object recognizer 23 to be modified. The existing object recognizer 23 may be acquired by reading a parameter from the storage unit 30. After the acquisition, the process proceeds to step S201.

In step S201, the controller 29 acquires at least the images and identification information of new target objects with respect to the existing object recognizer 23 acquired in step S200. To acquire the images and identification information, the controller 29 may cause the output device 15 of the terminal apparatus 10 to output an input request for the images and identification information. After at least the images and identification information have been acquired, the process proceeds to step S202.

In step S202, the controller 29 uses the object recognizer 23 acquired in step S200 to estimate each new target object acquired in step S201, based on the image of the target object. The controller 29 specifies the lowermost-layer classifiers 24ₗₛₜ that have estimated the target objects, in other words, classified the target objects into identification information. After the specification, the process proceeds to step S203.

In step S203, the controller 29 constructs temporary lowermost-layer classifiers 24ᵥₗₛₜ, based on the image and identification information of each of all the target objects and the new target objects that are classified by the lowermost-layer classifiers 24ₗₛₜ specified in step S202. After the construction, the process proceeds to step S204.

In step S204, the controller 29 replaces the lowermost-layer classifiers 24ₗₛₜ specified in step S202 with the temporary lowermost-layer classifiers 24ᵥₗₛₜ newly constructed in step S203. After the replacement, the process proceeds to step S205.

In steps S205 to S211, the controller 29 performs the same process as in steps S104 to S110 in the recognizer construction process. After the parameter is stored and provided in step S211, the modification process ends.

The recognition device 18 according to the present embodiment having the above-described configuration includes the controller 21 that functions as the object recognizer 23 that estimates a target object appearing in an image by causing the multiple classifiers 24 hierarchized in multiple layers to classify the target object in order. The multiple classifiers 24 include the classifier 24 in the uppermost layer 25 that classifies the target object appearing in the image into any one of multiple categories, and the multiple classifiers 24 in the lower layers 26 each of which performs classification of a category classified by the classifier 24 in the immediately upper layer into a lower-order category. The classifiers 24 in the lower layers 26 include the lowermost-layer classifiers 24ₗₛₜ each of which classifies the target object into the lower-order category which is identification information of the target object. The number of layers from the classifier 24 in the uppermost layer 25 to the lowermost-layer classifiers 24ₗₛₜ is different between at least two target objects among target objects estimated by the object recognizer 23. As in Patent Literature 1, when the number of categories classified is large in an object recognizer that estimates a target object by causing hierarchized classifiers to classify the target object in order, target objects may be classified into one or some categories in a concentrated manner. In a typical classifier, the classification accuracy decreases as the number of categories classified increases. Thus, as described above, in the object recognition described in Patent Literature 1, when target objects concentrate on one or some categories, the classification accuracy of a classifier that classifies the identification information of the target objects belonging to the categories may decrease. On the other hand, in the recognition device 18 having the above-described configuration, the number of layers from the classifier 24 in the uppermost layer 25 to the lowermost-layer classifiers 24ₗₛₜ is different among all target objects. Thus, the recognition device 18 may function as the object recognizer 23 including the lowermost-layer classifiers 24ₗₛₜ that classify the target objects into identification information in the same layer and the classifiers 24 that classify the target objects into lower-order categories. Thus, the recognition device 18 may reduce the concentration of target objects on any category in each classifier 24. As a result, even when the number of target objects is large, the recognition device 18 may suppress a decrease in classification accuracy in each classifier 24 and reduce a decrease in object recognition by the object recognizer 23.

In the recognition device 18 according to the present embodiment, the number of categories classified by at least one or some of the multiple classifiers 24 is equal to or less than a first threshold value. As described above, in general, the classification accuracy decreases as the number of categories classified by a classifier increases. For such an event, the recognition device 18 having the above-described configuration may suppress a decrease in classification accuracy.

In the recognition device 18 according to the present embodiment, the degree of variation in a classified category of a feature quantity used for classification by at least one or some of the multiple classifiers 24 is equal to or less than a second threshold value. In general, in one classified category, variation of a feature quantity used for the classification indicates room for further classification implementable with high accuracy. For such an event, the recognition device 18 having the above-described configuration may function as the object recognizer 23 constituted by the classifiers 24 having high classification accuracy.

The information processing apparatus 13 that functions as a recognizer constructing apparatus according to the present embodiment having the above-described configuration constructs the classifier 24 in the uppermost layer 25 that determines, based on an initial criterion, categories to which multiple target objects respectively belong, and that classifies the target objects to the determined categories. The information processing apparatus 13 constructs, based on the image and the identification information of each of all the target objects belonging to the respective categories classified by the classifier 24 in the uppermost layer 25, the temporary lowermost-layer classifier 24ᵥₗₛₜ that classifies all the target objects belonging to the respective categories into respective pieces of the identification information. The information processing apparatus 13 fixes the temporary lowermost-layer classifier 24ᵥₗₛₜ as a lowermost-layer classifier 24ₗₛₜ when the temporary lowermost-layer classifier 24ᵥₗₛₜ satisfies a predetermined condition. Until the temporary lowermost-layer classifier 24ᵥₗₛₜ satisfies the predetermined condition, the information processing apparatus 13 repeats determination of a certain criterion that enables classification of all target objects each determined to belong to a certain category classified by the classifier 24 in a layer immediately above the temporary lowermost-layer classifier 24ᵥₗₛₜ, determination of lower-order categories to which all the target objects respectively belong based on the certain criterion, and replacement of the temporary lowermost-layer classifier 24ᵥₗₛₜ with an intermediate-layer classifier 24 constructed based on an image of each of all the target objects belonging to the determined lower-order categories and the lower-order categories; and construction of a temporary lowermost-layer classifier 24ᵥₗₛₜ that classifies all the target objects belonging to the respective categories into respective pieces of the identification information, based on the image and the identification information of each of all the target objects belonging to the respective categories classified by the intermediate-layer classifier 24. With this configuration, the information processing apparatus 13 may improve the classification accuracy of each classifier 24 even when the number of target objects is enormous. Thus, the information processing apparatus 13 may construct the object recognizer 23 having high recognition accuracy constituted by the classifiers 24 having high classification accuracy.

In the information processing apparatus 13 that functions as a recognizer constructing apparatus according to the present embodiment, the predetermined condition is that the correct answer rate of a target object classified by the temporary lowermost-layer classifier 24ᵥₗₛₜ is equal to or more than a third threshold value. With this configuration, the information processing apparatus 13 may construct the object recognizer 23 with further improved recognition accuracy.

In the information processing apparatus 13 that functions as a recognizer constructing apparatus according to the present embodiment, the predetermined condition is at least one of a first condition that the number of pieces of identification information classified by the temporary lowermost-layer classifier 24ᵥₗₛₜ is equal to or less than a first threshold value, and a second condition that the degree of variation in a category corresponding to the temporary lowermost-layer classifier 24ᵥₗₛₜ of a feature quantity used for classification by the classifier 24 in a layer immediately above the temporary lowermost-layer classifier 24ᵥₗₛₜ is equal to or less than a second threshold value. With this configuration, the information processing apparatus 13 may construct the object recognizer 23 with further improved recognition accuracy.

The information processing apparatus 13 that functions as a recognizer constructing apparatus according to the present embodiment applies, to determination of fixing as the lowermost layer classifier 24ₗₛₜ, the predetermined condition having a higher correct answer rate among a correct answer rate of a target object classified by the temporary lowermost-layer classifier 24ᵥₗₛₜ when the predetermined condition is the first condition and a correct answer rate of a target object classified by the temporary lowermost-layer classifier 24ᵥₗₛₜ when the predetermined condition is the second condition. With this configuration, the information processing apparatus 13 may construct the object recognizer 23 with further improved recognition accuracy.

The information processing apparatus 13 that functions as a recognizer constructing apparatus according to the present embodiment stops, when a correct answer rate of a target object classified by the lowermost-layer classifier 24ₗₛₜ after the first condition is satisfied is lower than a correct answer rate of a target object classified by the temporary lowermost-layer classifier 24ᵥₗₛₜ before the first condition is satisfied, construction of an intermediate-layer classifier 24 for satisfying the first condition and construction of a lowermost-layer classifier 24ₗₛₜ in a layer below the intermediate-layer classifier 24. With this configuration, the information processing apparatus 13 reduces a decrease in classification accuracy, and thus reduces a decrease in recognition accuracy of the object recognizer 23 to be constructed.

The information processing apparatus 13 that functions as a recognizer constructing apparatus according to the present embodiment stops, when a correct answer rate of a target object classified by the lowermost-layer classifier 24ₗₛₜ after the second condition is satisfied is lower than a correct answer rate of a target object classified by the temporary lowermost-layer classifier 24ᵥₗₛₜ before the second condition is satisfied, construction of an intermediate-layer classifier 24 for satisfying the second condition and construction of the intermediate-layer classifier 24ₗₛₜ. With this configuration, the information processing apparatus 13 reduces a decrease in classification accuracy, and thus reduces a decrease in recognition accuracy of the object recognizer 23 to be constructed.

The information processing apparatus 13 that functions as a recognizer constructing apparatus according to the present embodiment determines the initial criterion and at least a part of the certain criterion by clustering. With this configuration, the information processing apparatus 13 may determine an appropriate criterion for an image that is actually obtained. Thus, the information processing apparatus 13 may construct the object recognizer 23 with further improved recognition accuracy.

In the information processing apparatus 13 that functions as a recognizer constructing apparatus according to the present embodiment, the communication unit 28 further acquires an instruction to determine a classification criterion, and the controller 29 determines the initial criterion and at least a part of the certain criterion, based on the instruction acquired by the communication unit 28. With this configuration, the information processing apparatus 13 may determine, as a classification criterion, a criterion determined by a user to be applicable.

The information processing apparatus 13 that functions as a recognizer modifying apparatus according to the present embodiment having the above-described configuration causes the identification information of a new target object to be estimated based on the image of the new target object by using the object recognizer 23. The information processing apparatus 13 specifies the lowermost-layer classifier 24ₗₛₜ that has classified the identification information. The information processing apparatus 13 replaces a temporary lowermost-layer classifier 24ᵥₗₛₜ with the lowermost-layer classifier 24ₗₛₜ, the temporary lowermost-layer classifier 24ᵥₗₛₜ being constructed based on the image and the identification information of each of all target objects and the new target object that are classified by the lowermost-layer classifier 24ₗₛₜ. The information processing apparatus 13 fixes the temporary lowermost-layer classifier 24ᵥₗₛₜ as a lowermost-layer classifier 24ₗₛₜ when the temporary lowermost-layer classifier 24ᵥₗₛₜ satisfies a predetermined condition. Until the temporary lowermost-layer classifier 24ᵥₗₛₜ satisfies the predetermined condition, the information processing apparatus 13 repeats determination of a certain criterion that enables classification of all target objects each determined to belong to a certain category classified by a classifier 24 in a layer immediately above the temporary lowermost-layer classifier 24ᵥₗₛₜ, determination of lower-order categories to which all the target objects respectively belong based on the certain criterion, and replacement of the temporary lowermost-layer classifier 24ᵥₗₛₜ with an intermediate-layer classifier 24 constructed based on an image of each of all the target objects belonging to the determined lower-order categories and the lower-order categories; and construction of a temporary lowermost-layer classifier 24ᵥₗₛₜ that classifies all the target objects belonging to the respective categories into respective pieces of the identification information, based on the image and the identification information of each of all the target objects belonging to the respective categories classified by the intermediate-layer classifier 24. With this configuration, the information processing apparatus 13 may modify the existing object recognizer 23 having a hierarchical structure so as to recognize a new target object while reducing a decrease in recognition accuracy.

The embodiment of the recognition device 18 and the information processing apparatus 13 that functions as a recognizer constructing apparatus and a recognizer modifying apparatus has been described above. The embodiment of the present disclosure may include an embodiment of, in addition to a method or a program for implementing the device and the apparatus, a storage medium (for example, an optical disk, a magneto-optical disk, a CD-ROM, a CD-R, a CD-RW, a magnetic tape, a hard disk, or a memory card) storing the program.

The implementation form of the program is not limited to an application program such as an object code compiled by a compiler or a program code executed by an interpreter, and may be a form such as a program module incorporated in an operating system. The program may or may not be configured such that all processing is performed only in a CPU on a control board. The program may be configured such that a part or the entirety of the program is executed by another processing unit mounted on an expansion board or an expansion unit added to the board as necessary.

The drawings for describing the embodiment according to the present disclosure are schematic. Dimensional ratios and the like in the drawings do not necessarily coincide with actual dimensional ratios.

The embodiment according to the present disclosure has been described based on the drawings and examples. Note that a person skilled in the art could make various variations or changes based on the present disclosure. Thus, note that the variations or changes are included in the scope of the present disclosure. For example, the functions or the like included in the individual constituent units can be reconfigured without logical inconsistency. Multiple constituent units or the like can be combined into one or can be divided.

For example, in the present embodiment, the information processing apparatus 13 functioning as a recognizer constructing apparatus and a recognizer modifying apparatus is configured to construct and modify the object recognizer 23, but the recognizer constructing apparatus and the recognizer modifying apparatus may be separate apparatuses.

In the present embodiment, the information processing apparatus 13 functioning as a recognizer constructing apparatus and a recognizer modifying apparatus constructs and modifies the object recognizer 23, and the terminal apparatus 10 includes the recognition device 18. However, the information processing apparatus 13 may not only construct and modify the object recognizer 23 but also function as a recognition device. In such a configuration, for example, the terminal apparatus 10 may include a communication unit that provides an image generated by the image capturing unit 14 to the information processing apparatus 13 and acquires identification information which is a recognition result made by the object recognizer 23 in the information processing apparatus 13.

In the present embodiment, the information processing apparatus 13 functioning as a recognizer constructing apparatus is configured to replace a temporary lowermost-layer classifier 24ᵥₗₛₜ with an intermediate-layer classifier 24 in the construction of the object recognizer 23, but the replacement with an intermediate-layer classifier 24 is not limited to a temporary lowermost-layer classifier 24ᵥₗₛₜ. Any classifier 24 in a layer above a temporary lowermost-layer classifier 24ᵥₗₛₜ, including the classifier 24 in the uppermost layer 25, may be replaced with the intermediate-layer classifier 24.

All the structural elements described in the present disclosure and/or all of the disclosed methods or all the steps of a process may be combined in any combination except for combinations in which these features are mutually exclusive. Each of the features described in the present disclosure may be replaced with an alternative feature serving for the same, equivalent, or similar purpose, unless explicitly denied. Thus, unless explicitly denied, each of the disclosed features is merely one example of a comprehensive series of identical or equivalent features.

Furthermore, the embodiment according to the present disclosure is not limited to any specific configuration of the above-described embodiment. The embodiment according to the present disclosure may extend to all novel features described in the present disclosure, or any combination thereof, or all novel methods described, or processing steps, or any combination thereof.

In the present disclosure, descriptions such as "first" and "second" are identifiers for distinguishing corresponding elements from each other. In the present disclosure, the elements distinguished by "first", "second", and the like may have ordinal numbers exchanged with each other. For example, "first" and "second" serving as identifiers may be exchanged between the first threshold value and the second threshold value. The exchange of the identifiers is performed simultaneously. Even after the exchange of the identifiers, the elements are distinguished from each other. The identifiers may be deleted. The elements whose identifiers have been deleted are distinguished from each other by reference signs. The identifiers such as "first" and "second" in the present disclosure alone are not to be used as a basis for interpreting the order of corresponding elements or the existence of identifiers with smaller numbers.

### REFERENCE SIGNS

- 10: terminal apparatus
- 11: information processing system
- 12: network
- 13: information processing apparatus
- 14: image capturing unit
- 15: output device
- 16: placement table
- 17: support column
- 18: recognition device
- 19: communication unit
- 20: storage unit
- 21: controller
- 22: input unit
- 23: object recognizer
- 24: classifier
- 24ₗₛₜ: lowermost-layer classifier
- 24ᵥₗₛₜ: temporary lowermost-layer classifier
- 25: uppermost layer
- 26: lower layer
- 27: object recognition model
- 28: communication unit
- 29: controller
- 30: storage unit

## Claims

1. A recognition device comprising:
an acquisition unit configured to acquire an image; and
a controller configured to function as an object recognizer that estimates a target object appearing in the image by causing multiple classifiers hierarchized in multiple layers to classify the target object in order, wherein
the multiple classifiers comprise:
an uppermost-layer classifier that classifies the target object appearing in the image into any one of multiple categories; and
multiple lower-layer classifiers each of which performs classification of a category classified by an upper-layer classifier into a lower-order category,
the lower-layer classifiers comprise one or more lowermost-layer classifiers each of which classifies the target object into the lower-order category which is identification information of the target object, and
a number of layers from the uppermost-layer classifier to the one or more lowermost-layer classifiers is different between at least two target objects having different identification information among target objects estimated by the object recognizer.

2. The recognition device according to claim 1, wherein
a number of categories classified by at least one or some of the multiple classifiers is equal to or less than a first threshold value.

3. The recognition device according to claim 1 or 2, wherein
a degree of variation in a classified category of a feature quantity used for classification by at least one or some of the multiple classifiers is equal to or less than a second threshold value.

4. The recognition device according to any one of claims 1 to 3, wherein
a correct answer rate of all target objects classified by at least one or some of the one or more lowermost-layer classifiers is equal to or more than a third threshold value.

5. A terminal apparatus comprising:
an image capturing unit;
a communication unit configured to provide an image generated by the image capturing unit to the recognition device according to any one of claims 1 to 4 and acquire the identification information of a target object appearing in the image; and
an output device configured to report the identification information.

6. An information processing apparatus that constructs an object recognizer that estimates identification information identifying a target object appearing in an image by causing multiple classifiers hierarchized in multiple layers to classify the target object in order, the recognizer constructing apparatus comprising:
an acquisition unit configured to acquire at least an image and identification information of each of multiple target objects; and
a controller configured to construct multiple classifiers, based on the image and the identification information of each of the multiple target objects, wherein
the multiple classifiers comprise:
an uppermost-layer classifier that classifies, based on the image acquired by the acquisition unit, the target object in the image into a category; and
a lowermost-layer classifier that classifies the target object belonging to a category classified by an upper-layer classifier into any piece of the identification information, and
the controller is configured to:
construct the uppermost-layer classifier that determines, based on an initial criterion, categories to which the multiple target objects respectively belong, and that classifies the target objects to the determined categories;
construct, based on the image and the identification information of each of all the target objects belonging to the respective categories classified by the uppermost-layer classifier, a temporary lowermost-layer classifier that classifies all the target objects belonging to the respective categories into respective pieces of the identification information;
fix the temporary lowermost-layer classifier as a lowermost-layer classifier when the temporary lowermost-layer classifier satisfies a predetermined condition; and
until the temporary lowermost-layer classifier satisfies the predetermined condition, repeat determination of a certain criterion that enables classification of all target objects each determined to belong to a certain category classified by a classifier in a layer immediately above the temporary lowermost-layer classifier, determination of lower-order categories to which all the target objects respectively belong based on the certain criterion, and replacement of the temporary lowermost-layer classifier with an intermediate-layer classifier constructed based on an image of each of all the target objects belonging to the determined lower-order categories and the lower-order categories; and construction of a temporary lowermost-layer classifier that classifies all the target objects belonging to the respective categories into respective pieces of the identification information, based on the image and the identification information of each of all the target objects belonging to the respective categories classified by the intermediate-layer classifier.

7. The recognizer constructing apparatus according to claim 6, wherein
the predetermined condition is that a correct answer rate of a target object classified by the temporary lowermost-layer classifier is equal to or more than a third threshold value.

8. The recognizer constructing apparatus according to claim 6, wherein
the predetermined condition is at least one of a first condition that a number of pieces of identification information classified by the temporary lowermost-layer classifier is equal to or less than a first threshold value, and a second condition that a degree of variation in a category corresponding to the temporary lowermost-layer classifier of a feature quantity used for classification by a classifier in a layer immediately above the temporary lowermost-layer classifier is equal to or less than a second threshold value.

9. The recognizer constructing apparatus according to claim 8, wherein
the controller is configured to apply, to determination of fixing as the lowermost layer classifier, the predetermined condition having a higher correct answer rate among a correct answer rate of a target object classified by the temporary lowermost-layer classifier when the predetermined condition is the first condition and a correct answer rate of a target object classified by the temporary lowermost-layer classifier when the predetermined condition is the second condition.

10. The recognizer constructing apparatus according to claim 8, wherein
the controller is configured to, when a correct answer rate of a target object classified by the lowermost-layer classifier after the first condition is satisfied is lower than a correct answer rate of a target object classified by the temporary lowermost-layer classifier before the first condition is satisfied, stop construction of an intermediate-layer classifier for satisfying the first condition and construction of a lowermost-layer classifier in a layer below the intermediate-layer classifier.

11. The recognizer constructing apparatus according to claim 8 or 10, wherein
the controller is configured to, when a correct answer rate of a target object classified by the lowermost-layer classifier after the second condition is satisfied is lower than a correct answer rate of a target object classified by the temporary lowermost-layer classifier before the second condition is satisfied, stop construction of an intermediate-layer classifier for satisfying the second condition and construction of a lowermost-layer classifier in a layer below the intermediate-layer classifier.

12. The recognizer constructing apparatus according to any one of claims 6 to 11, wherein
the controller is configured to determine the initial criterion and at least a part of the certain criterion by clustering.

13. The recognizer constructing apparatus according to any one of claims 6 to 12, wherein
the acquisition unit is configured to further acquire an instruction to determine a classification criterion, and
the controller is configured to determine the initial criterion and at least a part of the certain criterion, based on the instruction acquired by the acquisition unit.

14. A recognizer modifying apparatus comprising:
an acquisition unit configured to acquire at least an image and identification information of a new target object; and
a controller configured to modify the object recognizer in the recognition device according to any one of claims 1 to 4 by using the new target object, wherein
the controller is configured to:
cause the identification information of the new target object to be estimated based on the image by using the object recognizer;
specify a lowermost-layer classifier that has classified the identification information;
replace a temporary lowermost-layer classifier with the lowermost-layer classifier, the temporary lowermost-layer classifier being constructed based on the image and the identification information of each of all target objects and the new target object that are classified by the lowermost-layer classifier;
fix the temporary lowermost-layer classifier as a lowermost-layer classifier when the temporary lowermost-layer classifier satisfies a predetermined condition; and
until the temporary lowermost-layer classifier satisfies the predetermined condition, repeat determination of a certain criterion that enables classification of all target objects each determined to belong to a certain category classified by a classifier in a layer immediately above the temporary lowermost-layer classifier, determination of lower-order categories to which all the target objects respectively belong based on the certain criterion, and replacement of the temporary lowermost-layer classifier with an intermediate-layer classifier constructed based on an image of each of all the target objects belonging to the determined lower-order categories and the lower-order categories; and construction of a temporary lowermost-layer classifier that classifies all the target objects belonging to the respective categories into respective pieces of the identification information, based on the image and the identification information of each of all the target objects belonging to the respective categories classified by the intermediate-layer classifier.

15. A construction method for an object recognizer that estimates identification information identifying a target object appearing in an image by causing multiple classifiers hierarchized in multiple layers to classify the target object in order, the construction method comprising:
acquiring at least an image and identification information of each of multiple target obj ects; and
constructing multiple classifiers, based on the image and the identification information of each of the multiple target objects, wherein
the multiple classifiers comprise:
an uppermost-layer classifier that classifies, based on the image acquired in the acquiring, the target object in the image into a category; and
a lowermost-layer classifier that classifies the target object belonging to a category classified by an upper-layer classifier into any piece of the identification information, and
the constructing of the multiple classifiers comprises:
determining, based on an initial criterion, categories to which the multiple target objects respectively belong;
constructing the uppermost-layer classifier that classifies the target objects to the determined categories;
constructing, based on the image and the identification information of each of all the target objects belonging to the respective categories classified by the uppermost-layer classifier, a temporary lowermost-layer classifier that classifies all the target objects belonging to the respective categories into respective pieces of the identification information;
fixing the temporary lowermost-layer classifier as a lowermost-layer classifier when the temporary lowermost-layer classifier satisfies a predetermined condition; and
until the temporary lowermost-layer classifier satisfies the predetermined condition, repeating determination of a certain criterion that enables classification of all target objects each determined to belong to a certain category classified by a classifier in a layer immediately above the temporary lowermost-layer classifier, determination of lower-order categories to which all the target objects respectively belong based on the certain criterion, and replacement of the temporary lowermost-layer classifier with an intermediate-layer classifier constructed based on an image of each of all the target objects belonging to the determined lower-order categories and the lower-order categories; and construction of a temporary lowermost-layer classifier that classifies all the target objects belonging to the respective categories into respective pieces of the identification information, based on the image and the identification information of each of all the target objects belonging to the respective categories classified by the intermediate-layer classifier.

16. A modification method comprising:
acquiring at least an image and identification information of a new target object; and
modifying the object recognizer in the recognition device according to any one of claims 1 to 4 by using the new target object, wherein
the modifying of the object recognizer comprises:
causing the identification information of the new target object to be estimated based on the image by using the object recognizer;
specifying a lowermost-layer classifier that has classified the identification information;
replacing a temporary lowermost-layer classifier with the lowermost-layer classifier, the temporary lowermost-layer classifier being constructed based on the image and the identification information of each of all target objects and the new target object that are classified by the lowermost-layer classifier;
fixing the temporary lowermost-layer classifier as a lowermost-layer classifier when the temporary lowermost-layer classifier satisfies a predetermined condition; and
until the temporary lowermost-layer classifier satisfies the predetermined condition, repeating determination of a certain criterion that enables classification of all target objects each determined to belong to a certain category classified by a classifier in a layer immediately above the temporary lowermost-layer classifier, determination of lower-order categories to which all the target objects respectively belong based on the certain criterion, and replacement of the temporary lowermost-layer classifier with an intermediate-layer classifier constructed based on an image of each of all the target objects belonging to the determined lower-order categories and the lower-order categories; and construction of a temporary lowermost-layer classifier that classifies all the target objects belonging to the respective categories into respective pieces of the identification information, based on the image and the identification information of each of all the target objects belonging to the respective categories classified by the intermediate-layer classifier.
